# EUROPEAN PATENT SPECIFICATION

(11) **EP 3 567 345 B1**
(45) Date of publication and mention of the grant of the patent: **18.02.2026**
(21) Application number: 18171322.3
(22) Date of filing: 08.05.2018
(51) Int. Cl.: G01C 21/34, G01C 21/36, G08G 1/16

(54) **VEHICLE, APPARATUS, METHOD AND COMPUTER PROGRAM FOR ADAPTING A CURRENT ROUTE, NETWORK COMPONENT, METHOD AND COMPUTER PROGRAM FOR PROVIDING DATA ON A TRAFFIC DISTURBING VEHICLE**
FAHRZEUG, VORRICHTUNG, VERFAHREN UND COMPUTERPROGRAMM ZUR ANPASSUNG EINER AKTUELLEN ROUTE, NETZWERKKOMPONENTE, VERFAHREN UND COMPUTERPROGRAMM ZUR BEREITSTELLUNG VON DATEN ÜBER EIN VERKEHRSSTÖRENDES FAHRZEUG
VÉHICULE, APPAREIL, PROCÉDÉ ET PROGRAMME INFORMATIQUE PERMETTANT D'ADAPTER UNE ROUTE ACTUELLE, COMPOSANT DE RÉSEAU, PROCÉDÉ ET PROGRAMME INFORMATIQUE POUR FOURNIR DES DONNÉES SUR UN VÉHICULE PERTURBANT LA CIRCULATION

(43) Date of publication of application: 13.11.2019
(73) Proprietor: Volkswagen AG, 38440 Wolfsburg (DE); MAN Truck & Bus SE, 80995 München (DE); Scania CV AB, 151 87 Södertälje (SE)
(72) Inventor: Hehn, Thorsten, 85055 Ingolstadt (DE); Buburuzan, Teodor, 38118 Braunschweig (DE); Alieiev, Roman, 39576 Stendal (DE); Cerwall, Joakim, 11352 Stockholm (SE); Zielinski, Ernst, 44803 Bochum (DE)
(74) Representative: 2SPL Patentanwälte PartG mbB

(56) References cited:
- EP-B1- 2 798 863
- GB-A- 2 548 395
- US-A1- 2013 158 845
- US-A1- 2014 012 494
- US-A1- 2016 091 328
- US-A1- 2016 093 213

## Description

The present invention relates to a vehicle, an apparatus, a method and a computer program for adapting a current route, a network component, a method and a computer program for providing data on a traffic disturbing vehicle, more particularly, but not exclusively to a concept for taking slow moving or traffic disturbing vehicles into account for route planning.

Traffic and route information are considered in the algorithms of navigation systems. For example, information on traffic disturbances, e. g. traffic jams, can be made available, e.g. in terms of traffic message channels used for this purpose in radio broadcast systems. Several mechanisms have been developed in order to keep traffic information as up to date as possible. Wireless communication may also be used to collect traffic information and also to share information between vehicles on the road. Document US 2010/0324775 A1 discloses a concept which uses wireless communication and in which roadside wireless transceivers collect information regarding passing vehicles and a central database is compiled relating to traffic conditions. Document US 6,411,896 B1 discloses a concept for bicycle navigation in which information on bicycle traffic can be made available to motorized vehicles, e.g. in terms of warning messages. Document US 2010/0114477 A1 describes a navigation system which switches a mode based on a determined moving speed of the navigation device. For example, different display modes or displayed map sizes can be adapted based on the moving speed.

Document US 2014/0012494 A1 describes a collaborative GPS navigation system and method, which enable nearby vehicles to share and compare planned route for improving navigation. While navigating along a planned route, a navigation device on a first vehicle may detect a specific, slower-moving second vehicle. The navigation device on the first vehicle may obtain the planned route of the second vehicle, compare the two planned routes to identify a shared route segment, and dynamically revise the planned route and route metrics according to the comparison.

Document US 2016/0093213 A1 discloses technologies for reporting and predicting emergency vehicle routes, which include a cloud server to receive emergency vehicle route data from an emergency vehicle, the emergency vehicle route data indicating a travel route of the emergency vehicle. The cloud server determines a scope of disclosure of the travel route to other vehicles based on the emergency vehicle route data and which other vehicles different from the emergency vehicle to which to convey the travel route of the emergency vehicle. The cloud server transmits a portion of the travel route of the emergency vehicle to the other vehicles based on the scope of disclosure.

There is a demand for an improved communication concept for route determination in navigation systems. The independent claims provide an improved concept for route determination in navigation systems.

Embodiments are based on the finding that especially in cities, there are many instances of slow vehicles following pre-defined routes. Examples of this are municipal buses and trams. It is a further finding that it is not unusual for other vehicles to get stuck behind such slow vehicles, with significant impact to travel times. At the same time the route the slow vehicle follows is known, and also the position of the vehicle is known, for example, the bus or tram operator is aware of this information, or the information is available at the slow vehicle itself. Embodiments make this information available and allow adaptation of a current route based on this information.

Embodiments provide an apparatus for adapting a current route of a vehicle in a navigation system, as defined in claim 1.

In embodiments the control module may be configured to determine the presence of the traffic disturbing vehicle by communicating with entities in the mobile communication system. Embodiments may enable efficient identification of a traffic disturbing vehicle by means of mobile communications, e.g. by receiving identification information from the vehicle itself or from another vehicle, from infrastructure of the mobile communication system, respectively.

In some embodiments the one or more sensors may comprise one or more elements of the group of a camera sensor, a radar sensor, and a light detection and ranging sensor. The control module may be configured to determine the presence of the traffic disturbing vehicle using a plurality of sensors. Embodiments may enable a utilization of multiple sensors for efficient and reliable detection of a traffic disturbing vehicle. The control module may be configured to provide information determined from the sensor data to a network component, e.g. a server, a backend server, a base station, etc. Embodiments may provide a mechanism to make sensor data of a detected traffic disturbing vehicle available at a more central point in the network, therewith being available for further applications or users. Moreover, the control module may be configured to communicate with a backend server using the mobile communication system. The control module may be configured to obtain at least one element of the group of information on the presence of the traffic disturbing vehicle, information on a vehicle identification of the traffic disturbing vehicle, information on a vehicle type of the traffic disturbing vehicle, the information on the route, information on an expected timing along the route, and information on an adaptation of the current route from the backend server. Hence, information sensed before or by other traffic or road user may be used in some embodiments.

The control module may be configured to compare the current route to the route of the traffic disturbing vehicle, estimate a delay in case of staying on the current route behind the traffic disturbing vehicle, determine at least one alternative route and a delay of the alternative route, compare the delay of the current route with the delay of the alternative route an select the route with the shorter delay. Embodiments may enable to reconfigure a current route to a faster one. The control module may be further configured to provide information on the traffic disturbing vehicle to other vehicles, e.g. using the mobile communication system, for example, by means of direct communication such as car-to-car or vehicle-to-vehicle. The control module may be configured to obtain information on traffic disturbing vehicles from other vehicles or from the mobile communication system in a similar way. The control module may be configured to base a route determination on the information on traffic disturbing vehicles. Embodiments may make information on traffic disturbing vehicles available such that these can be taken into account when planning a route.

According to the invention, the control module is configured to detect the presence of a bus, a tram, or a slow moving vehicle as traffic disturbing vehicle. The control module is configured to obtain the information on the route of the traffic disturbing vehicle from a network server, a network component, a base station, a data base, etc. A further embodiment is a vehicle comprising the apparatus as described herein.

A further embodiment is a method for adapting a current route of a vehicle in a navigation system. The method comprises determining a presence of a traffic disturbing vehicle based on the sensor data, and identifying the vehicle. The method further comprises obtaining information on the route of the traffic disturbing vehicle, and adapting a current route based on the information on the route of the traffic disturbing vehicle.

Embodiments further provide a computer program having a program code for performing one or more of the above described methods, when the computer program is executed on a computer, processor, or programmable hardware component. A further embodiment is a computer readable storage medium storing instructions which, when executed by a computer, processor, or programmable hardware component, cause the computer to implement one of the methods described herein.

Some other features or aspects will be described using the following non-limiting embodiments of apparatuses or methods or computer programs or computer program products by way of example only, and with reference to the accompanying figures, in which:
Fig. 1 illustrates an embodiment of an apparatus for adapting a route, an embodiment of a network component, and an embodiment of a system;
Fig. 2 shows another scenario with an embodiment of a vehicle and an embodiment of a backend server;
Fig. 3 shows a block diagram of a flow chart of an embodiment of a method for adapting a route; and
Fig. 4 shows a block diagram of a flow chart of an embodiment of a method for providing data on a traffic disturbing vehicle.

Various example embodiments will now be described more fully with reference to the accompanying drawings in which some example embodiments are illustrated.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

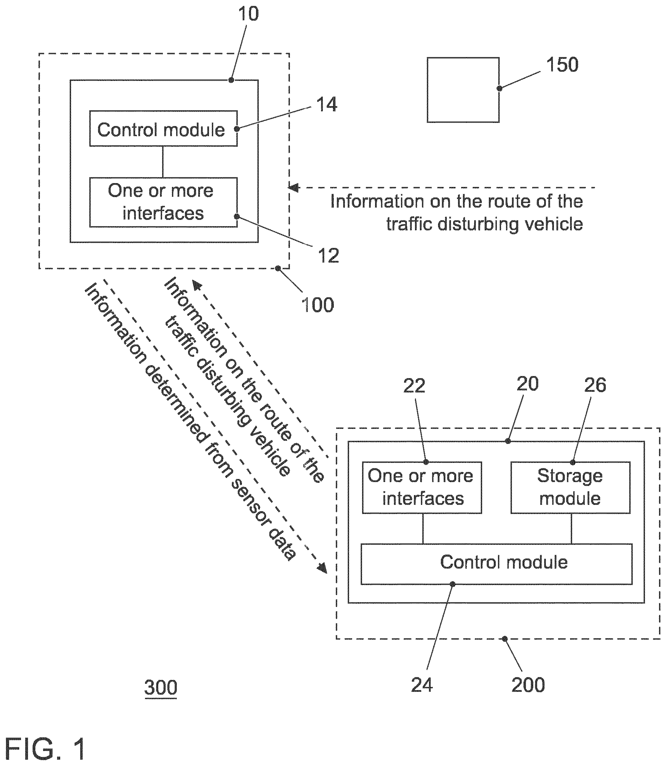

Fig. 1 illustrates an embodiment of an apparatus 10 for adapting a route. Fig 1 further shows an embodiment a network component 20, and an embodiment of a system 300. Further embodiments are a vehicle 100 (shown in broken lines as optional in Fig. 1) comprising an embodiment of the apparatus 10 and a backend- or network server 200 (shown in broken lines as optional in Fig 1) comprising an embodiment of the network component 20. Fig. 1 shows an apparatus 10 for adapting a current route of a vehicle 100 in a navigation system. The apparatus 10 comprises one or more interfaces 12, which are configured to communicate in a mobile communication system 300. The apparatus further comprises a control module 14, which is coupled to the one or more interfaces 12 and which is configured to control the one or more interfaces 12. The control module 14 is further configured to determine a presence of a traffic disturbing vehicle 150 and to identify the traffic disturbing vehicle 150. The control module 14 is further configured to obtain information on the route of the traffic disturbing vehicle, and to adapt the current route based on the information on the route of the traffic disturbing vehicle.

As indicated in Fig. 1 by the broken line arrows, there are different options in embodiments on where the information on the route of the traffic disturbing vehicle comes from. One option is from the vehicle itself, e.g. using car-to-car or vehicle-to-vehicle communication, as will be detailed subsequently. Another option is from a network component using wireless communications in the mobile communication system 300. Yet another option is to use prestored information from the apparatus 10, which may then comprise a storage or storage module to store information on such route, e.g. information on bus or tram routes in a city.

Fig. 1 also shows an embodiment of a network component 20 for providing data on the traffic disturbing vehicle 150. The network component 20 comprises one or more interfaces 22 configured to communicate in a network, which in the depicted embodiment corresponds to the mobile communication system 300. The network component 20 further comprises a storage module 26, which is configured to store data on vehicles. The network component 20 further comprises a control module 24, which is coupled to the one or more interfaces 22 and to the storage module 26, and which is configured to control the one or more interfaces 22 and the storage module 26. The control module 24 is further configured to receive information on identities and routes of traffic disturbing vehicles and to store the information using the storage module 26. The control module 24 is further configured to receive a request for information on a route of a traffic disturbing vehicle using the one or more interfaces 22, the request comprises information on an identification of the traffic disturbing vehicle 150. The control module 24 is further configured to provide information on the route of the traffic disturbing vehicle from the storage module 26 based on the information on the identification.

In embodiments the one or more interfaces 12, 22, may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 12, 22 may comprise further components to enable according communication in the mobile communication system 300, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The one or more interfaces 12, 22 may be coupled to one or more antennas, which may correspond to any transmit and/or receive antennas, such as horn antennas, dipole antennas, patch antennas, sector antennas etc. The antennas may be arranged in a defined geometrical setting, such as a uniform array, a linear array, a circular array, a triangular array, a uniform field antenna, a field array, combinations thereof, etc. In some examples the one or more interfaces 12, 22 may serve the purpose of transmitting or receiving or both, transmitting and receiving, information, such as information related to capabilities, application requirements, requests, message interface configurations, feedback, information related to control commands etc.

As shown in Fig. 1 the respective one or more interfaces 12, 22 are coupled to the respective control modules 14, 24 at the network component 20 and the apparatus 10. In embodiments the control modules 14, 24 may be implemented using one or more processing units, one or more processing devices, any means for processing, such as a processor, a computer or a programmable hardware component being operable with accordingly adapted software. In other words, the described functions of the control modules 14, 24 may as well be implemented in software, which is then executed on one or more programmable hardware components. Such hardware components may comprise a general purpose processor, a Digital Signal Processor (DSP), a micro-controller, etc.

The storage module may correspond to any means for storing data, e.g. in terms of a memory module. The means for storing may correspond to any memory or storage. Examples are read only memory (ROM) for storing data, programmable ROM (PROM), erasable PROM (EPROM), electrically EPROM (EEPROM), random access memory (RAM), dynamic RAM (DRAM), static RAM (SRAM), non-volatile storage, any semiconductor memory, and it may be arranged in any architecture using any technology, e.g. phase change memory (PCM), dynamic random access memory (DRAM), flash memory, stackable cross point memory (SXP), three dimensional cross point (3D XPoint), DDR (double data rate memory), a hard drive, a flash drive, a solid state drive, etc.

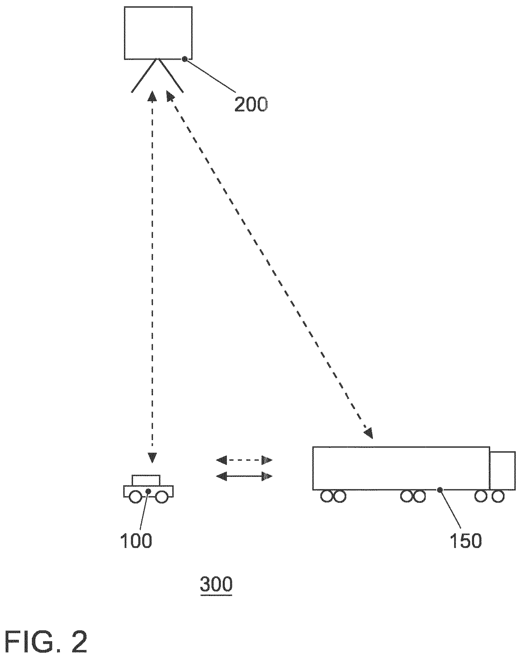

Fig. 1 also shows an embodiment of a system 300 comprising embodiments of the network component 20 and an apparatus 10, network controller/server or base station 200 and mobile transceiver/vehicle 100, respectively. In embodiments, communication, i.e. transmission, reception or both, make take place among mobile transceivers/vehicles 100 directly and/or between mobile transceivers/vehicles 100 and a network infrastructure component 200 (e.g. a base station, a network server, a backend server, etc). Such communication may make use of a mobile communication system 300. In other words such communication may be carried out directly, e.g. by means of Device-to-Device (D2D) communication, which may also comprise Vehicle-to-Vehicle (V2V) communication in case of vehicles 100, 150, as shown in Fig. 2. Such communication may be carried out using the specifications of a mobile communication system 300.

The mobile communication system 300 may, for example, correspond to one of the Third Generation Partnership Project (3GPP)-standardized mobile communication networks, where the term mobile communication system is used synonymously to mobile communication network. The mobile or wireless communication system may correspond to a mobile communication system of the 5th Generation (5G) and may use mm-Wave technology. The mobile communication system may correspond to or comprise, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver can be operable or configured to communicate with one or more active mobile transceivers/vehicles 100, 150 and a base station transceiver can be located in or adjacent to a coverage area of another base station transceiver, e.g. a macro cell base station transceiver or small cell base station transceiver. Hence, embodiments may provide a mobile communication system 300 comprising two or more mobile transceivers/vehicles 100, 150 and one or more base station transceivers, wherein the base station transceivers may establish macro cells or small cells, as e.g. pico-, metro-, or femto cells. A mobile transceiver may correspond to a smartphone, a cell phone, user equipment, a laptop, a notebook, a personal computer, a Personal Digital Assistant (PDA), a Universal Serial Bus (USB) -stick, a car, a vehicle etc. A mobile transceiver may also be referred to as User Equipment (UE) or mobile in line with the 3GPP terminology. A vehicle 100, 150 may correspond to any conceivable means for transportation, e.g. a car, a bike, a motorbike, a van, a truck, a bus, a ship, a boat, a plane, a train, a tram, etc.

A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a relay station, a transmission point etc., which may be further subdivided in a remote unit and a central unit.

A mobile transceiver 100, 150 can be associated with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

Fig. 2 shows another scenario with an embodiment of a vehicle 100, a traffic disturbing vehicle 150 and an embodiment of a backend server 200. As indicated by the arrows direct communication may be used between the embodiment of the vehicle 100 and the traffic disturbing vehicle 150, which in terms of the mobile communication system may both correspond to mobile transceivers.

Mobile transceivers 100, 150 may communicate directly with each other, i.e. without involving any base station transceiver, which is also referred to as Device-to-Device (D2D) communication. An example of D2D is direct communication between vehicles, also referred to as Vehicle-to-Vehicle communication (V2V). In order to do so radio resources are used, e.g. frequency, time, code, and/or spatial resources, which may as well be used for wireless communication with a base station transceiver. The assignment of the radio resources may be controlled by the base station transceiver, i.e. the determination which resources are used for D2D and which are not. Here and in the following radio resources of the respective components may correspond to any radio resources conceivable on radio carriers and they may use the same or different granularities on the respective carriers. The radio resources may correspond to a Resource Block (RB as in LTE/LTE-A/LTE-unlicensed (LTE-U)), one or more carriers, sub-carriers, one or more radio frames, radio sub-frames, radio slots, one or more code sequences potentially with a respective spreading factor, one or more spatial resources, such as spatial sub-channels, spatial precoding vectors, any combination thereof, etc.

For example, direct Cellular Vehicle-to-Anything (C-V2X), where V2X includes at least V2V, V2-Infrastructure (V2I), etc., transmission according to 3GPP Release 14 can be managed by infrastructure (so-called mode 3) or run in a User Equipment (UE) Autonomous mode (UEA), (so-called mode 4). In embodiments the two or more mobile transceivers 100, 150 as indicated by Figs.1and 2 may be registered in the same mobile communication system 300. In other embodiments one or more of the mobile transceivers 100, 150 may be registered in different mobile communication systems 300. The different mobile communication systems 300 may use the same access technology but different operators or they may use different access technologies as outlined above.

In the embodiment depicted in Fig. 2 the vehicle 100 comprises an embodiment of the apparatus 10 as shown in Fig. 1. In a further embodiment the apparatus 10 further comprises one or more sensors, and the control module 14 is configured to determine the presence of the traffic disturbing vehicle using sensor data from the one or more sensors. For example, sensors may be used to sense a vehicle driving in front. Such sensing may be carried out when directly behind the traffic disturbing vehicle (line of sight) or even from a distance, e.g. using means of wireless communication. In one embodiment car-to-car or V2V signals may be received from the traffic disturbing vehicle 150 allowing its detection and identification. In embodiments the one or more sensors may comprise one or more elements of the group of a camera sensor, a radar sensor, and a light detection and ranging sensor. The control module may be configured to determine the presence of the traffic disturbing vehicle using a plurality of sensors, e.g. combining camera or image data and radar. As further depicted in Fig. 2 the control module 14 may be configured to provide information determined from the sensor data to a network component 20, which then uses the data for storage, e.g. to build up a data base on traffic disturbing vehicles.

For example, in cities, there are many instances of slow vehicles following pre-defined routes. Examples of this are municipal buses and trams. In embodiments the control module 14 may be configured to detect the presence of a bus, a tram, or a slow moving vehicle as traffic disturbing vehicle 150.

It is not unusual for other vehicles to get stuck behind such slow vehicles, with significant impact to travel times. At the same time the route the slow vehicle follows is known, and also the position of the vehicle is known. Either by the bus or tram operator, or the information is available in the slow vehicle itself. This is made available for other vehicles 100 in embodiments, their route or navigation is adjusted based thereon. For example, the control module 14 may be configured to communicate with a backend server 200 using the mobile communication system 300. The control module 14 may be configured to obtain at least one element of the group of information on the presence of the traffic disturbing vehicle, information on a vehicle identification of the traffic disturbing vehicle, information on a vehicle type of the traffic disturbing vehicle, the information on the route, information on an expected timing along the route, and information on an adaptation of the current route from the backend server 200. In embodiments operators may make such information available to a backend server 200 or a backend server 200 may collect such information from traffic monitoring and information provided by vehicles, such as vehicle 100, to build up a corresponding data base and data history. In return, information on a road being impacted by a slow moving vehicle may be provided to a navigation system in a vehicle 100. The control module 24 at the network component may hence be configured to form a data base on traffic disturbing vehicles using the storage module by storing tracking data of the vehicles.

The control module 14 may then be further configured to use the information from the backend server 200 to adapt the current route. In some embodiments such adaptation may result in estimating a delay or a time the vehicle will have to spent/lose behind the traffic disturbing vehicle and adapting the route information in terms of adapting an estimated time of arrival.

According to the invention, the control module 14 presents an estimated time loss when staying behind the traffic disturbing vehicle to a driver, who is provided with further choices, e.g. a selection on whether to change the route or to stay behind - potentially together with estimated chances for overtaking or passing the vehicle. According to the invention, a data base includes also information on whether the vehicle can be expected to pull over in order to let other vehicles pass. Such information may for example be derived from past statistics or from regulations of the operator of the vehicle. An example is the consideration of bus stops along the route and whether such bus stops have a bus bay or a cut out, which offers a chance for some vehicles to pass the bus or tram while it stops.

The control module 14 may be configured to compare the current route to the route of the traffic disturbing vehicle, estimate a delay in case of staying on the current route behind the traffic disturbing vehicle, determine at least one alternative route and a delay of the alternative route, compare the delay of the current route with the delay of the alternative route an select the route with the shorter delay. For example, the congested route may then be avoided or the right (advantageous) time for travel may be chosen. Embodiments might not be restricted to published timing information of vehicles at bus or tram stops, which often have low accuracy. For example, such information may be made available by the bus or tram operator. Such information may as well be used for operative management and addition communicated in a structured form to vehicles 100. Embodiments may allow drivers to efficiently use these roads, instead of leaving only the option to completely avoid the pre-defined routes (thus incurring time penalties), or taking a chance at times when the traffic (and number of buses/trams) is low. For example, in an embodiment a combination of a camera sensor (on the car or vehicle 100) and V2V communication may be used to identify the slow moving vehicle (either within sight of the car, or at a longer distance), and then a procedure is initiated in which information on the pre-defined route and position is downloaded to the car, thus enabling taking navigation action to optimize the choice of route. The control module 14 is then configured to obtain the information on the route of the traffic disturbing vehicle 150 from a network server 200. Moreover, the control module 14 may be configured to provide information on the traffic disturbing vehicle to other vehicles. The control module 14 may be configured to obtain information on traffic disturbing vehicles from other vehicles or from the mobile communication system 300. The control module 14 may be configured to base a route determination on the information on traffic disturbing vehicles.

At least some embodiments use a combination of a camera sensor (on the car) and V2V communication to identify the slow moving vehicle (either within sight of the car, or at a longer distance), and then initiate a procedure where information on the pre-defined route and position is downloaded to the car, thus enabling taking navigation action to optimize or improve the choice of route. In an embodiment the following steps explain the flow:
1. The slow moving vehicle is identified as a "vehicle with a predefined route". This is done either through the camera sensor (fall back), or via a standard V2V message being transmitted by the slow moving vehicle. Some embodiments may only consider vehicles which are on the route the ego-vehicle or own vehicle is about to travel.
2. The car initiates a V2V message exchange with the slow moving vehicle. The slow moving vehicle sends information on the pre-defined route, and expected timing along the pre-defined route (if available).
   Another option for retrieving information on the route of the hindering vehicle is by means of a backend server. As already laid out above a traffic disturbing vehicle may correspond to a bus or a tram, i.e. vehicles relating to public transportation for which a vehicle number may also identify its route, for example, the route of bus no. 56 may be retrieved from a backend server 200. In further embodiments other traffic disturbing or slow moving vehicles are also conceivable. For example, a tractor or other agricultural vehicles may be identified in front of a vehicle on a current route. Base on the identification, e.g. by means of a visual registration number such as a license plate or by means of a V2V identification, a backend server may be checked on whether route information for that vehicle is available. Such data may be based on the disturbing vehicle itself providing such information or by statistical information, e.g. the tractor rides along this route every Saturday afternoon, or this speed limited vehicle drives along this route every weekday morning between 7 and 9 am, etc. In such embodiments the V2V communication may be replaced by communication with a corresponding network component 20 have having route information stored. In further embodiments the route information may even be locally stored at the apparatus 10, e.g. by means of a table of route of busses in a certain city.
3. Based on the route information, the navigation guidance system in the car is updated, and flashes a possibly improved route, avoiding the slow moving vehicle. With V2V this can happen well in advance, giving the car time to change route in an orderly way. V2V may hence enable to detect the hindering vehicle as well as its route before being hindered by the vehicle. Again information on hindering vehicles already detected along a route may also be retrieved from the network component based on a route. For example, based on a time of travel a prediction of hindering vehicles to be expected on the route may be taken into account when planning a route.

If the route communication is expanded to V2X, then slow moving vehicles at longer distances (some kilometers) are also possible to identify, and to communicate with.

In some embodiments autonomous driving may be used. In an autonomous vehicle, the driver does not have the agility to overtake and might be even more annoyed when stuck behind a vehicle. Embodiments may combine local sensor detection on a car (in this case a camera or radar sensor), and V2V or V2X. With this technology a slow moving vehicle may be identified. Using multiple sensors may make the detection in embodiments more robust. The normal camera sensor and V2X components in the car may be used in embodiments, but additional intelligence (processing) may be added in the communication ECU (Electronic Control Unit) of a vehicle. Also, embodiments may introduce an accordingly adapted API (Application Programming Interface) to a navigation system. A slow moving vehicle may be equipped with basic V2X communication, and intelligence (processing) in the communication ECU. In embodiments V2V may be used to request information from the slow moving or traffic disturbing vehicle on its route. Such information may comprise information on how long is the hindering vehicle going to use the present road or how much further is it going to drive on this road. Other embodiments may totally rely on a back-end of a bus or tram operator, for example. Information may then be communicated with the server over V2X, thus eliminating or circumventing the V2V direct connection between a car and the slow moving vehicle. Such embodiments may be more robust, and most of the intelligence/solution can be provided by the vehicle manufacturers.

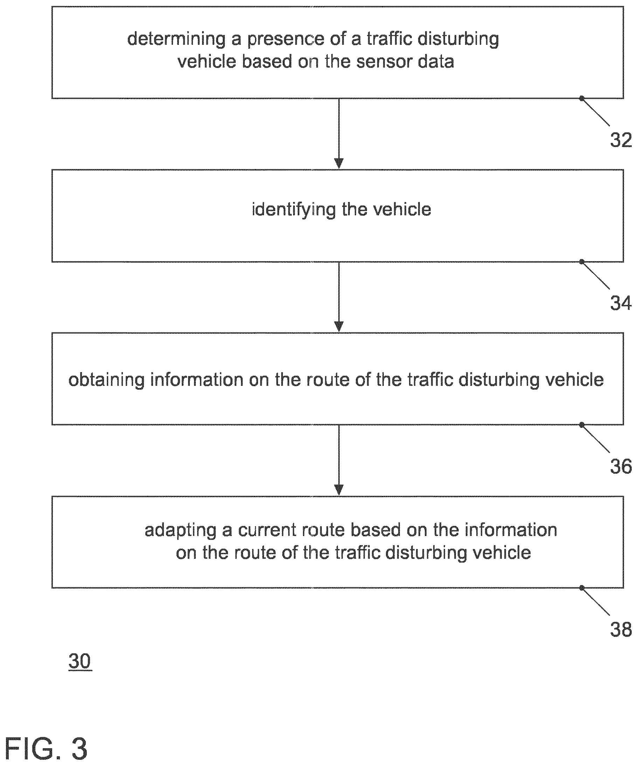

Fig. 3 shows a block diagram of a flow chart of an embodiment of a method 30 for adapting a current route of a vehicle in a navigation system. The method 30 comprises determining 32 a presence of a traffic disturbing vehicle based on the sensor data and identifying 34 the vehicle. The method 30 further comprises obtaining 36 information on the route of the traffic disturbing vehicle, and adapting 38 a current route based on the information on the route of the traffic disturbing vehicle.

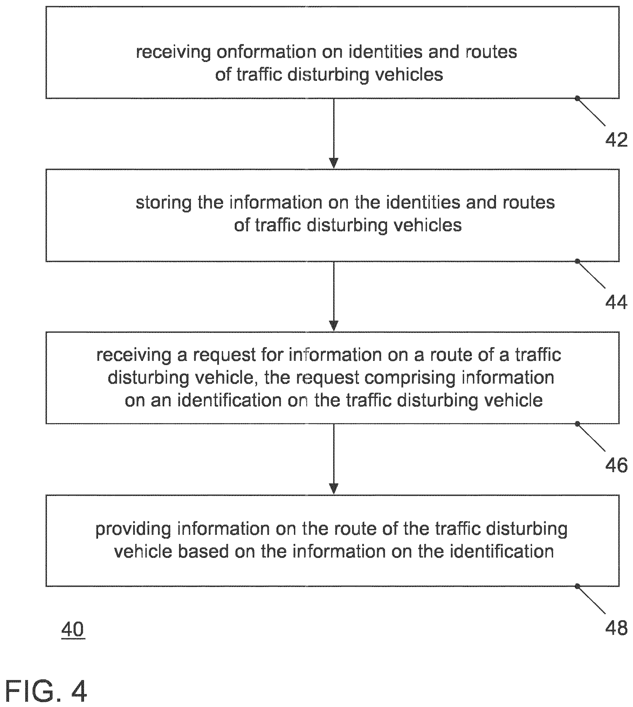

Fig. 4 shows a block diagram of a flow chart of an embodiment of a method 40 for providing data on a traffic disturbing vehicle. The method 40 comprises receiving 42 information on identities and routes of traffic disturbing vehicles and storing 44 the information on the identities and routes of traffic disturbing vehicles. The method 40 further comprises receiving 46 a request for information on a route of a traffic disturbing vehicle. The request comprises information on an identification of the traffic disturbing vehicle. The method further comprises providing 48 information on the route of the traffic disturbing vehicle based on the information on the identification.

As already mentioned, in embodiments the respective methods may be implemented as computer programs or codes, which can be executed on a respective hardware. Hence, another embodiment is a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein. A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, are within the scope of the invention as provided by the appended claims.

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is further to be noted that methods disclosed in the specification or in the claims may be implemented by a device having means for performing each of the respective steps of these methods.

### List of reference signs

- 10: apparatus for adapting a current route
- 12: one or more interfaces
- 14: control module
- 20: network component
- 22: One or more interfaces
- 24: control module
- 26: storage module
- 30: method for adapting a current route
- 32: determining a presence of a traffic disturbing vehicle based on the sensor data
- 34: identifying the vehicle
- 36: obtaining information on the route of the traffic disturbing vehicle
- 38: adapting a current route based on the information on the route of the traffic disturbing vehicle
- 40: method for providing data on a traffic disturbing vehicle
- 42: receiving information on identities and routes of traffic disturbing vehicles
- 44: storing the information on the identities and routes of traffic disturbing vehicles
- 46: receiving a request for information on a route of a traffic disturbing vehicle, the request comprising information on an identification of the traffic disturbing vehicle
- 48: providing information on the route of the traffic disturbing vehicle (150) based on the information on the identification
- 100: vehicle
- 150: traffic disturbing vehicle
- 200: server
- 300: system

## Claims

1. An apparatus (10) for adapting a current route of a vehicle (100) in a navigation system, the apparatus (10) comprising
one or more interfaces (12) configured to communicate in a mobile communication system (300);
one or more sensors;
a control module (14) configured to control the one or more interfaces (12), wherein the control module (14) is further configured to
determine a presence of a traffic disturbing vehicle (150) using sensor data from the one or more sensors;
identify the traffic disturbing vehicle (150);
obtain information on the route of the traffic disturbing vehicle (150) from a backend server (200) including information on whether the traffic disturbing vehicle is expected to pull over;
determine a presence of a bus, a tram, or a slow-moving vehicle as traffic disturbing vehicle (150); present an estimated time loss when staying behind the traffic disturbing vehicle to a driver of the vehicle;
and
provide a choice to the driver of the vehicle whether to change a route or to stay behind based on the information on whether the traffic disturbing vehicle is expected to pull over.

2. The apparatus (10) of claim 1, wherein the control module (14) is configured to further determine the presence of the traffic disturbing vehicle (150) by communicating with other entities in the mobile communication system (300).

3. The apparatus (10) of one of the claims 1 or 2, wherein the one or more sensors comprise one or more elements of the group of a camera sensor, a radar sensor, and a light detection and ranging sensor, and/or wherein the control module is configured to determine the presence of the traffic disturbing vehicle (150) using a plurality of sensors.

4. The apparatus (10) of one of the claims 1 to 3, wherein the control module (14) is configured to provide information determined from the sensor data to a network component (20).

5. The apparatus (10) of one of the claims 1 to 4, wherein the control module (14) is configured to communicate with a backend server using the mobile communication system (300), wherein the control module (14) is configured to obtain at least one element of the group of information on the presence of the traffic disturbing vehicle (150), information on a vehicle identification of the traffic disturbing vehicle (150), information on a vehicle type of the traffic disturbing vehicle (150), information on an expected timing along the route, and information on an adaptation of the current route from the backend server (200).

6. The apparatus (10) of one of the claims 1 to 5, wherein the control module (14) is configured to compare the current route to the route of the traffic disturbing vehicle (150), estimate a delay in case of staying on the current route behind the traffic disturbing vehicle (150), determine at least one alternative route and a delay of the alternative route, compare the delay of the current route with the delay of the alternative route an select the route with the shorter delay.

7. The apparatus (10) of one of the claims 1 to 6, wherein the control module (14) is configured to provide information on the traffic disturbing vehicle (150) to other vehicles, wherein the control module (14) is configured to obtain information on traffic disturbing vehicles (150) from other vehicles or from the mobile communication system (300), and/or wherein the control module (14) is configured to base a route determination on the information on traffic disturbing vehicles (150).

8. A vehicle (100) comprising the apparatus (10) of one of the claims 1 to 7.

9. A method (30) for adapting a current route of a vehicle in a navigation system, the method (30) comprising
determining (32) a presence of a traffic disturbing vehicle (150) based on the sensor data;
identifying (34) the vehicle;
obtaining (36) information on the route of the traffic disturbing vehicle (150) from a backend server including information on whether the traffic disturbing vehicle is expected to pull over; and
determining a presence of a bus, a tram, or a slow-moving vehicle as traffic disturbing
vehicle (150); presenting an estimated time loss when staying behind the traffic disturbing vehicle to a driver of the vehicle;
and
providing a choice to the driver of the vehicle whether to change a route or to stay behind based on the information on whether the traffic disturbing vehicle is expected to pull over.

10. A computer program having a program code for performing the method of claim 9, when the computer program is executed on a computer, a processor, or a programmable hardware component.

## Patentansprüche

1. Einrichtung (10) zum Anpassen einer aktuellen Route eines Fahrzeugs (100) in einem Navigationssystem, wobei die Einrichtung (10) umfasst
eine oder mehrere Schnittstellen (12), die konfiguriert sind, um in einem mobilen Kommunikationssystem (300) zu kommunizieren;
einen oder mehrere Sensoren;
ein Steuermodul (14), das konfiguriert ist, um die eine oder die mehreren Schnittstellen (12) zu steuern, wobei das Steuermodul (14) ferner konfiguriert ist zum
Ermitteln eines Vorhandenseins eines verkehrsstörenden Fahrzeugs (150) unter Verwendung von Sensordaten von dem einen oder den mehreren Sensoren;
Identifizieren des verkehrsstörenden Fahrzeugs (150);
Erhalten von Informationen über die Route des verkehrsstörenden Fahrzeugs (150) von einem Backend-Server (200), die Informationen darüber einschließen, ob erwartet wird, dass das verkehrsstörende Fahrzeug zur Seite fährt;
Ermitteln eines Vorhandenseins eines Busses, einer Straßenbahn oder eines langsam fahrenden Fahrzeugs als verkehrsstörendes Fahrzeug (150); Darstellen eines geschätzten Zeitverlusts beim Verbleiben hinter dem verkehrsstörenden Fahrzeug für einen Fahrer des Fahrzeugs; und
Bereitstellen einer Wahlmöglichkeit für den Fahrer des Fahrzeugs, ob die Route geändert oder dahinter geblieben werden soll, basierend auf den Informationen, ob erwartet wird, dass das verkehrsstörende Fahrzeug zur Seite fährt.

2. Einrichtung (10) nach Anspruch 1, wobei das Steuermodul (14) konfiguriert ist, um das Vorhandensein des verkehrsstörenden Fahrzeugs (150) durch Kommunizieren mit anderen Entitäten in dem mobilen Kommunikationssystem (300) weiter zu ermitteln.

3. Einrichtung (10) nach einem der Ansprüche 1 oder 2, wobei der eine oder die mehreren Sensoren ein oder mehrere Elemente der Gruppe aus einem Kamerasensor, einem Radarsensor und einem Lichtdetektions- und Entfernungsmessungssensor umfassen und/oder wobei das Steuermodul konfiguriert ist, um das Vorhandensein des verkehrsstörenden Fahrzeugs (150) unter Verwendung einer Vielzahl von Sensoren zu bestimmen.

4. Einrichtung (10) nach einem der Ansprüche 1 bis 3, wobei das Steuermodul (14) konfiguriert ist, um einer Netzwerkkomponente (20) Informationen bereitzustellen, die aus den Sensordaten ermittelt wurden.

5. Einrichtung (10) nach einem der Ansprüche 1 bis 4, wobei das Steuermodul (14) konfiguriert ist, um mit einem Backend-Server unter Verwendung des mobilen Kommunikationssystems (300) zu kommunizieren, wobei das Steuermodul (14) konfiguriert ist, um mindestens ein Element der Gruppe von Informationen über das Vorhandensein des verkehrsstörenden Fahrzeugs (150), Informationen über eine Fahrzeugidentifizierung des verkehrsstörenden Fahrzeugs (150), Informationen über einen Fahrzeugtyp des verkehrsstörenden Fahrzeugs (150), Informationen über eine erwartete Zeitplanung entlang der Route und Informationen über eine Anpassung der aktuellen Route von dem Backend-Server (200) zu erhalten.

6. Einrichtung (10) nach einem der Ansprüche 1 bis 5, wobei das Steuermodul (14) konfiguriert ist, um die aktuelle Route mit der Route des verkehrsstörenden Fahrzeugs (150) zu vergleichen, eine Verzögerung im Fall des Verbleibens auf der aktuellen Route hinter dem verkehrsstörenden Fahrzeug (150) zu schätzen, mindestens eine alternative Route und eine Verzögerung der alternativen Route zu ermitteln, die Verzögerung der aktuellen Route mit der Verzögerung der alternativen Route zu vergleichen und die Route mit der kürzeren Verzögerung auszuwählen.

7. Einrichtung (10) nach einem der Ansprüche 1 bis 6, wobei das Steuermodul (14) konfiguriert ist, um anderen Fahrzeugen Informationen über das verkehrsstörende Fahrzeug (150) bereitzustellen, wobei das Steuermodul (14) konfiguriert ist, um Informationen über verkehrsstörende Fahrzeuge (150) von anderen Fahrzeugen oder von dem mobilen Kommunikationssystem (300) zu erhalten, und/oder wobei das Steuermodul (14) konfiguriert ist, um eine Routenermittlung auf die Informationen über verkehrsstörende Fahrzeuge (150) zu stützen.

8. Fahrzeug (100), das die Einrichtung (10) nach einem der Ansprüche 1 bis 7 umfasst.

9. Verfahren (30) zum Anpassen einer aktuellen Route eines Fahrzeugs in einem Navigationssystem, wobei das Verfahren (30) umfasst
Ermitteln (32) einer Anwesenheit eines verkehrsstörenden Fahrzeugs (150) basierend auf den Sensordaten;
Identifizieren (34) des Fahrzeugs;
Erhalten (36) von Informationen über die Route des verkehrsstörenden Fahrzeugs (150) von einem Backend-Server, die Informationen darüber einschließen, ob erwartet wird, dass das verkehrsstörende Fahrzeug zur Seite fährt; und
Ermitteln eines Vorhandenseins eines Busses, einer Straßenbahn oder eines langsam fahrenden Fahrzeugs als verkehrsstörendes Fahrzeug (150); Darstellen eines geschätzten Zeitverlusts beim Verbleiben hinter dem verkehrsstörenden Fahrzeug für einen Fahrer des Fahrzeugs; und
Bereitstellen einer Wahlmöglichkeit für den Fahrer des Fahrzeugs, ob die Route geändert oder dahinter geblieben werden soll, basierend auf den Informationen, ob erwartet wird, dass das verkehrsstörende Fahrzeug zur Seite fährt.

10. Computerprogramm, das einen Programmcode zum Durchführen des Verfahrens nach Anspruch 9 aufweist, wenn das Computerprogramm auf einem Computer, einem Prozessor oder einer programmierbaren Hardwarekomponente ausgeführt wird.

## Revendications

1. Appareil (10) permettant d'adapter un itinéraire actuel d'un véhicule (100) dans un système de navigation, l'appareil (10) comprenant
une ou plusieurs interfaces (12) configurées pour communiquer dans un système de communication mobile (300) ;
un ou plusieurs capteurs ;
un module de commande (14) configuré pour commander la ou les interfaces (12), dans lequel le module de commande (14) est en outre configuré pour
déterminer la présence d'un véhicule perturbant la circulation (150) à l'aide de données de capteur à partir du ou des capteurs ;
identifier le véhicule perturbant la circulation (150) ;
obtenir des informations sur l'itinéraire du véhicule perturbant la circulation (150) à partir d'un serveur dorsal (200) comportant des informations sur le fait que le véhicule perturbant la circulation devrait se garer ;
déterminer la présence d'un bus, d'un tram ou d'un véhicule se déplaçant lentement en tant que véhicule perturbant la circulation (150) ; présenter à un conducteur du véhicule une perte de temps estimée en restant derrière le véhicule perturbant la circulation ; et
fournir au conducteur du véhicule un choix entre changer d'itinéraire ou rester derrière sur la base des informations sur le fait que le véhicule perturbant la circulation devrait se garer.

2. Appareil (10) selon la revendication 1, dans lequel le module de commande (14) est configuré pour déterminer en outre la présence du véhicule perturbant la circulation (150) en communiquant avec d'autres entités dans le système de communication mobile (300).

3. Appareil (10) selon l'une quelconque des revendications 1 ou 2, dans lequel le ou les capteurs comprennent un ou plusieurs éléments du groupe d'un capteur de caméra, d'un capteur radar et d'un capteur de détection et de télémétrie par lumière, et/ou dans lequel le module de commande est configuré pour déterminer la présence du véhicule perturbant la circulation (150) à l'aide d'une pluralité de capteurs.

4. Appareil (10) selon l'une quelconque des revendications 1 à 3, dans lequel le module de commande (14) est configuré pour fournir des informations déterminées à partir des données de capteur à un composant de réseau (20).

5. Appareil (10) selon l'une quelconque des revendications 1 à 4, dans lequel le module de commande (14) est configuré pour communiquer avec un serveur dorsal à l'aide du système de communication mobile (300), dans lequel le module de commande (14) est configuré pour obtenir au moins un élément du groupe d'informations sur la présence du véhicule perturbant la circulation (150), des informations sur une identification de véhicule du véhicule perturbant la circulation (150), des informations sur un type de véhicule du véhicule perturbant la circulation (150), des informations sur un timing prévu le long de l'itinéraire, et des informations sur une adaptation de l'itinéraire actuel à partir du serveur dorsal (200).

6. Appareil (10) selon l'une quelconque des revendications 1 à 5, dans lequel le module de commande (14) est configuré pour comparer l'itinéraire actuel à l'itinéraire du véhicule perturbant la circulation (150), estimer un retard en cas de maintien sur l'itinéraire actuel derrière le véhicule perturbant la circulation (150), déterminer au moins un itinéraire alternatif et un retard de l'itinéraire alternatif, comparer le retard de l'itinéraire actuel avec le retard de l'itinéraire alternatif et sélectionner l'itinéraire présentant le retard le plus court.

7. Appareil (10) selon l'une quelconque des revendications 1 à 6, dans lequel le module de commande (14) est configuré pour fournir des informations sur le véhicule perturbant la circulation (150) à d'autres véhicules, dans lequel le module de commande (14) est configuré pour obtenir des informations sur des véhicules perturbant la circulation (150) à partir d'autres véhicules ou du système de communication mobile (300), et/ou dans lequel le module de commande (14) est configuré pour baser une détermination d'itinéraire sur les informations sur des véhicules perturbant la circulation (150).

8. Véhicule (100) comprenant l'appareil (10) selon l'une quelconque des revendications 1 à 7.

9. Procédé (30) permettant d'adapter un itinéraire actuel d'un véhicule dans un système de navigation, le procédé (30) comprenant
la détermination (32) de la présence d'un véhicule perturbant la circulation (150) sur la base des données de capteur ;
l'identification (34) du véhicule ;
l'obtention (36) d'informations sur l'itinéraire du véhicule perturbant la circulation (150) à partir d'un serveur dorsal comportant des informations sur le fait que le véhicule perturbant la circulation devrait se garer ; et
la détermination de la présence d'un bus, d'un tram ou d'un véhicule se déplaçant lentement en tant que véhicule perturbant la circulation (150) ; la présentation à un conducteur du véhicule d'une perte de temps estimée en restant derrière le véhicule perturbant la circulation ; et
la fourniture au conducteur du véhicule d'un choix entre changer d'itinéraire ou rester derrière sur la base des informations sur le fait que le véhicule perturbant la circulation devrait se garer.

10. Programme d'ordinateur ayant un code de programme permettant de mettre en œuvre le procédé selon la revendication 9, lorsque le programme d'ordinateur est exécuté sur un ordinateur, un processeur, ou un composant matériel programmable.
